# EUROPEAN PATENT APPLICATION

(11) **EP 4 826 488 A1**
(43) Date of publication of application: **21.10.2026**
(21) Application number: 25738912.2
(22) Date of filing: 07.01.2025
(51) Int. Cl.: G06F 1/16

(54) **ELECTRONIC DEVICE COMPRISING GUIDE**

(30) Priority: 08.01.2024 KR 20240003074; 19.01.2024 KR 20240008910
(71) Applicant: Samsung Electronics Co., Ltd., Suwon-si, Gyeonggi-do 16677 (KR)
(72) Inventor: SHIN, Moonchul, Suwon-si, Gyeonggi-do 16677 (KR)
(74) Representative: HGF
(86) International application number: PCT/KR2025/000310
(87) International publication number: WO 2025/150838

(57) **Abstract**

The present disclosure relates to an electronic device. The electronic device according to an embodiment of the present disclosure comprises: a first housing; a second housing disposed to be movable with respect to the first housing; a flexible display which has at least a portion configured to be folded or unfolded and which is disposed to be movable together with the second housing; a support member fixed to the first housing; a first frame fixed to the first housing; and a second frame disposed to be movable with respect to the first frame and configured to be movable together with the second housing, wherein at least a portion of the second frame may be positioned between the first frame and the support member.

## Description

### [Technical Field]

Various embodiments of the disclosure relate to an electronic device, for example, to an electronic device including a guide.

### [Background Art]

With the development of information communication technology and semiconductor technology, various functions are being integrated into a single portable electronic device. For example, an electronic device may implement not only a communication function, but also an entertainment function such as a game, a multimedia function such as music/video playback, a communication and security function for mobile banking, a schedule management function, and an electronic wallet function. Such an electronic device is being downsized to be conveniently carried by a user.

As mobile communication services have expanded to multimedia service areas, there is a need for the size of a display of an electronic device to be enlarged so that a user may sufficiently use multimedia services as well as voice calls or short messages. However, the size of the display of the electronic device is in a trade-off relationship with the downsizing of the electronic device.

The above-described information may be provided as related art for the purpose of helping understanding of the disclosure. No assertion or determination is raised as to whether any of the foregoing may be applicable as prior art in connection with the disclosure.

### [Detailed Description of the Invention]

### [Technical Solution]

An electronic device according to an embodiment of the disclosure may include: a first housing; a second housing movably disposed with respect to the first housing; a flexible display movably disposed together with the second housing, wherein at least a portion of the flexible display is configured to be foldable or unfoldable; a support member fixed to the first housing; a first frame fixed to the first housing; and a second frame movably disposed with respect to the first frame, and configured to move together with the second housing, wherein at least a portion of the second frame may be located between the first frame and the support member.

An electronic device according to an embodiment of the disclosure may include: a first housing; a second housing movably disposed with respect to the first housing; a flexible display movably disposed together with the second housing, wherein at least a portion of the flexible display is configured to be foldable or unfoldable; a support member fixed to the first housing; and a guide at least a portion of which is movably disposed together with the second housing, wherein the guide may include: a first frame fixed to the first housing and including a frame side wall disposed between the first housing and the support member; a second frame movably disposed with respect to the first frame, and configured to move together with the second housing; and a guide space formed between the frame side wall and the support member, in which the second frame is movably disposed.

### [Brief Description of Drawings]

The above-described aspects, or other aspects, configurations and/or advantages of an embodiment of the disclosure may become more apparent through the following detailed description with reference to the accompanying drawings.
FIG. 1 is a block diagram illustrating an electronic device in a network environment according to various embodiments of the disclosure.
FIG. 2 is a view illustrating a state in which a portion of a display is accommodated in a housing according to an embodiment of the disclosure.
FIG. 3 is a view illustrating a state in which a portion of a display is visually exposed to the outside of a housing according to an embodiment of the disclosure.
FIG. 4 is an exploded view illustrating an electronic device according to an embodiment of the disclosure.
FIG. 5 is an exploded view illustrating an electronic device according to an embodiment of the disclosure.
FIG. 6A is a first state view illustrating an electronic device according to an embodiment of the disclosure.
FIG. 6B is a second state view illustrating an electronic device according to an embodiment of the disclosure.
FIG. 7 is a cross-sectional view illustrating an electronic device according to an embodiment of the disclosure.
FIG. 8 is a cross-sectional view illustrating an electronic device according to an embodiment of the disclosure.
FIG. 9 is a portion of an electronic device according to an embodiment of the disclosure.
FIG. 10A is a portion of an electronic device in a first state according to an embodiment of the disclosure.
FIG. 10B is a portion of an electronic device in a second state according to an embodiment of the disclosure.
FIG. 11 is a portion of an electronic device according to an embodiment of the disclosure.
FIG. 12 is a portion of an electronic device according to an embodiment of the disclosure.
FIG. 13 is a view illustrating a guide according to an embodiment of the disclosure.
FIG. 14 is a view illustrating a guide according to an embodiment of the disclosure.
FIG. 15 is an exploded view illustrating a guide according to an embodiment of the disclosure.
FIG. 16 is a portion of a cross-sectional view illustrating an electronic device according to an embodiment of the disclosure.

Throughout the accompanying drawings, similar reference numerals may be assigned to similar parts, configurations and/or structures.

### [Mode for Carrying out the Invention]

The following description with respect to the accompanying drawings may provide an understanding of various exemplary implementations of the disclosure including the claims and equivalents thereof. The exemplary embodiments disclosed in the following description include various specific details to aid in understanding, but these are considered to be one of various exemplary embodiments. Accordingly, those of ordinary skill in the art will understand that various changes and modifications of the various implementations described in the disclosure may be made without departing from the scope and technical spirit of the disclosure. Further, descriptions of well-known functions and configurations may be omitted for clarity and conciseness.

The terms and words used in the following description and claims are not limited to the bibliographical meanings, but may be used to clearly and consistently describe an embodiment of the disclosure. Accordingly, it should be apparent to those of ordinary skill in the art that the following description of various implementations of the disclosure is provided for the purpose of description, not for the purpose of limiting the disclosure as defined by the appended claims and equivalents thereof.

It should be understood that the singular forms "a", "an", and "the" include plural referents unless the context clearly dictates otherwise. Accordingly, for example, reference to "a component surface" may be understood as including one or more of the surfaces of the component.

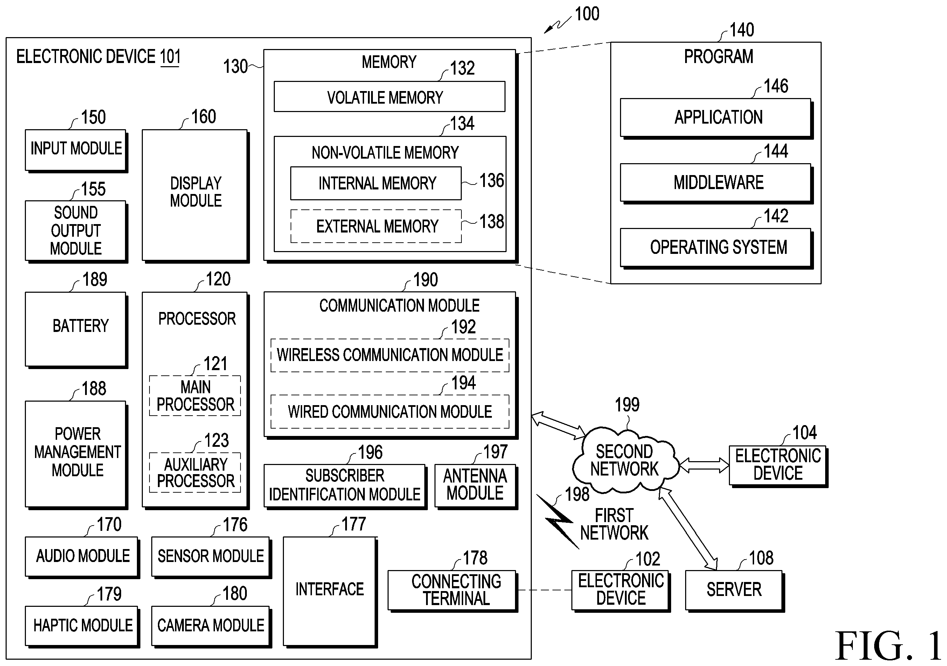

FIG. 1 is a block diagram illustrating an electronic device 101 in a network environment 100 according to various embodiments.

Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160).

The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

The electronic device according to various embodiments disclosed in the disclosure may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

The various embodiments of the disclosure and the terms used herein are not intended to limit the technical features described in the disclosure to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the disclosure, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the disclosure may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

The various embodiments of the disclosure may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to various embodiments disclosed in the disclosure may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{™}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

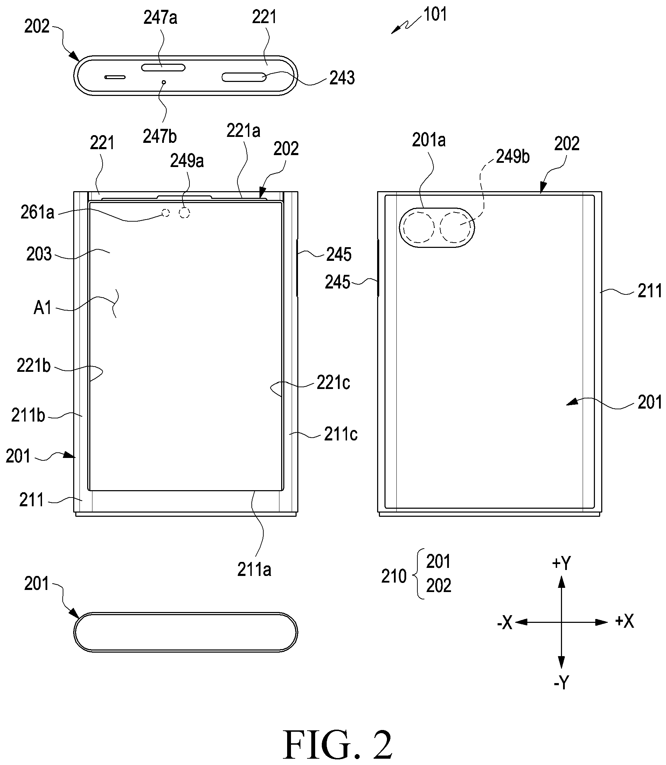

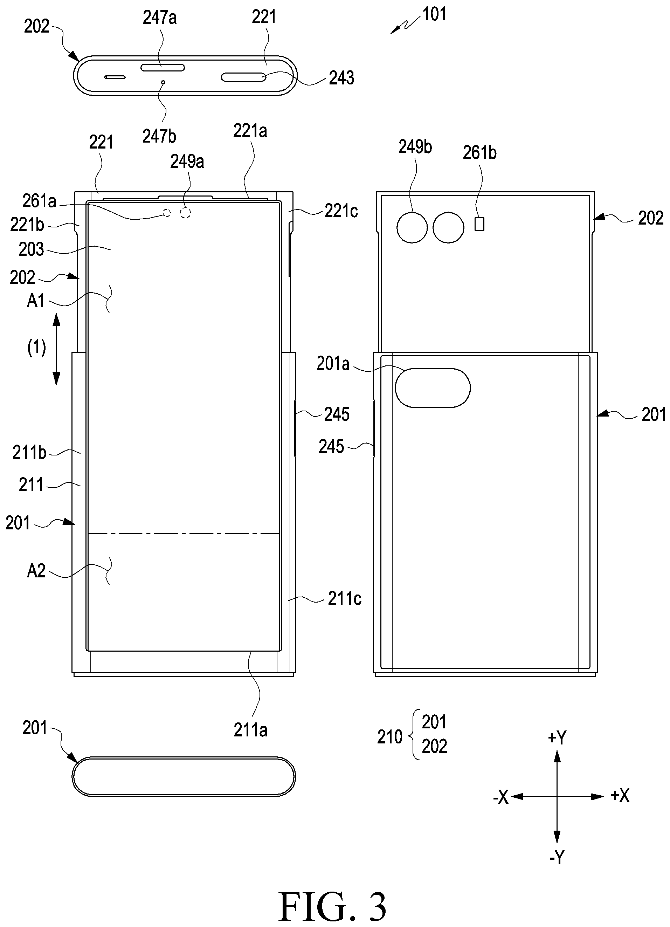

FIG. 2 is a view illustrating a state in which a portion of a display is accommodated in a housing according to an embodiment of the disclosure. FIG. 2 is a view illustrating a state in which a second display area (e.g., a display area A2 of FIG. 3) of a display is accommodated in a housing, according to an embodiment of the disclosure. FIG. 3 is a view illustrating a state in which a portion of a display is visually exposed to the outside of a housing according to an embodiment of the disclosure. FIG. 3 is a view illustrating a state in which a second display area of a display is visually exposed to the outside of a housing, according to an embodiment of the disclosure.

FIGS. 2 and 3 illustrate a structure in which a display 203 (e.g., a flexible display or a rollable display) is extended in a longitudinal direction (e.g., +Y direction) when viewed from the front of an electronic device 101. However, the extension direction of the display 203 is not limited to one direction (e.g., +Y direction). For example, the extension direction of the display 203 may be design-modified to be extendable in an upward direction (+Y direction), a rightward direction (e.g., +X direction), a leftward direction (e.g., -X direction) and/or a downward direction (e.g., -Y direction).

The state illustrated in FIG. 2 may be referred to as a slide-in state of the electronic device 101, or a closed state of the second display area A2 of the display 203.

The state illustrated in FIG. 3 may be referred to as a slide-out state of the electronic device 101, or an open state of the second display area A2 of the display 203.

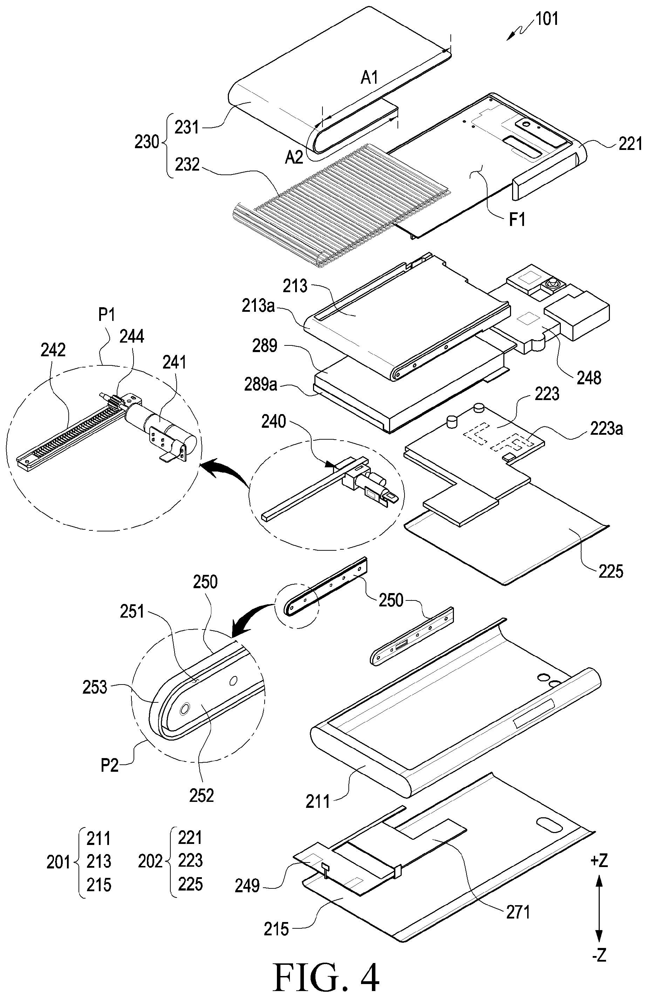

The embodiments of FIGS. 2 to 3 may be combined with the embodiment of FIG. 1, or the embodiments of FIGS. 4 to 16.

Referring to FIGS. 2 and 3, the electronic device 101 (e.g., the electronic device 101 of FIG. 1) may include a housing 210. The housing 210 may include a first housing portion 201 and a second housing portion 202 movably disposed relative to the first housing portion 201. In an embodiment, the electronic device 101 may be interpreted as a structure in which the first housing portion 201 is slidably disposed with respect to the second housing portion 202. According to an embodiment, the second housing portion 202 may be disposed to be reciprocally movable by a predetermined distance in the illustrated direction, e.g., the direction indicated by an arrow (1), with respect to the first housing portion 201. The first housing portion 201 may be referred to as a "first housing". The second housing portion 202 may be referred to as a "second housing".

According to an embodiment, the second housing portion 202 may be referred to as a slide portion or a slide housing, and may be relatively movable with respect to the first housing portion 201. According to an embodiment, the second housing portion 202 may accommodate various electrical and electronic components such as a circuit board or a battery. When the electronic device 101 is in the slide-in state, the second housing portion 202 may be defined as being in a retracted position, and when the electronic device 101 is in the slide-out state, the second housing portion 202 may be defined as being in an extended position.

According to an embodiment, the slide-in state of the electronic device 101 (or the slide-out state of the electronic device 101) may be changed to the slide-out state of the electronic device 101 (or the slide-in state of the electronic device 101) based on a predefined user input. For example, the slide-in state of the electronic device 101 (or the slide-out state of the electronic device 101) may be changed to the slide-out state (or the slide-in state of the electronic device 101) in response to a user input on a physical button exposed through a portion of the first housing portion 201 or a portion of the second housing portion 202. For example, the slide-in state (or the slide-out state of the electronic device 101) may be changed to the slide-out state (or the slide-in state of the electronic device 101) in response to a touch input on an executable object displayed within a screen display area (e.g., the first display area A1). For example, the slide-in state (or the slide-out state of the electronic device 101) may be changed to the slide-out state (or the slide-in state of the electronic device 101) in response to a touch input having a contact point on the screen display area (e.g., the first display area A1) and having a press intensity equal to or greater than a reference intensity. For example, the slide-in state (or the slide-out state of the electronic device 101) may be changed to the slide-out state (or the slide-in state of the electronic device 101) in response to a voice input received through a microphone of the electronic device 101. For example, the slide-in state (or the slide-out state of the electronic device 101) may be changed to the slide-out state (or the slide-in state of the electronic device 101) in response to an external force applied to the first housing portion 201 and/or the second housing portion 202 to move the second housing portion 202 with respect to the first housing portion 201. For example, the slide-in state (or the slide-out state of the electronic device 101) may be changed to the slide-out state (or the slide-in state of the electronic device 101) in response to a user input identified at an external electronic device (e.g., earbuds or a smart watch) connected to the electronic device 101. However, the slide in-out operation of the electronic device 101 is not limited thereto.

According to an embodiment, the first housing portion 201 may accommodate a sub circuit board electrically connected to an actuator (e.g., a motor), a speaker, a SIM socket and/or a main circuit board. The second housing portion 202 may accommodate a main circuit board on which electrical components such as an application processor (AP) and a communication processor (CP) are mounted. According to an embodiment, the second housing portion 202 may accommodate a sub circuit board electrically connected to an actuator, a speaker, a SIM socket and/or a main circuit board, and the first housing portion 201 may accommodate a main circuit board on which electrical components such as an application processor (AP) and a communication processor (CP) are mounted. According to an embodiment, the sub circuit board and the main circuit board may be disposed in the first housing portion 201, or may be disposed in the second housing portion 202.

According to an embodiment, the first housing portion 201 may include a first cover member 211 (e.g., a main case). The first cover member 211 may include a 1-1 side wall 211a, a 1-2 side wall 211b extending from the 1-1 side wall 211a, and a 1-3 side wall 211c extending from the 1-1 side wall 211a and substantially parallel to the 1-2 side wall 211b. According to an embodiment, the 1-2 side wall 211b and the 1-3 side wall 211c may be formed substantially perpendicular to the 1-1 side wall 211a.

According to an embodiment, the 1-1 side wall 211a, the 1-2 side wall 211b and the 1-3 side wall 211c of the first cover member 211 may be formed in a shape with one side (e.g., front face) open to accommodate (or surround) at least a portion of the second housing portion 202. For example, at least a portion of the second housing portion 202 may be surrounded by the first housing portion 201, and may slide in a direction parallel to a first surface (e.g., a first surface F1 of FIG. 4), e.g., in the direction of the arrow (1), while being guided by the first housing portion 201. According to an embodiment, the 1-1 side wall 211a, the 1-2 side wall 211b and/or the 1-3 side wall 211c of the first cover member 211 may be integrally formed. According to an embodiment, the 1-1 side wall 211a, the 1-2 side wall 211b and/or the 1-3 side wall 211c of the first cover member 211 may be formed as separate structures and coupled or assembled together.

According to an embodiment, the first cover member 211 may be formed to surround at least a portion of the display 203. For example, at least a portion of the display 203 may be formed to be surrounded by the 1-1 side wall 211a, the 1-2 side wall 211b and/or the 1-3 side wall 211c of the first cover member 211.

According to an embodiment, the second housing portion 202 may include a second cover member 221 (e.g., a slide plate). The second cover member 221 may have a plate shape and may include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1 side wall 221a, a 2-2 side wall 221b extending from the 2-1 side wall 221a, and a 2-3 side wall 221c extending from the 2-1 side wall 221a and substantially parallel to the 2-2 side wall 221b. According to an embodiment, the 2-2 side wall 221b and the 2-3 side wall 221c may be formed substantially perpendicular to the 2-1 side wall 221a.

According to various embodiments, as the second housing portion 202 moves in a first direction (e.g., direction (1)) parallel to the 2-2 side wall 221b or the 2-3 side wall 221c, the slide-in state and the slide-out state of the electronic device 101 may be formed. In the slide-in state of the electronic device 101, the second housing portion 202 may be located at a first distance from the 1-1 side wall 211a of the first housing portion 201, and in the slide-out state of the electronic device 101, the second housing portion 202 may move to be located at a second distance, which is greater than the first distance, from the 1-1 side wall 211a of the first housing portion 201. In an embodiment, in the slide-in state of the electronic device 101, the first housing portion 201 may be formed to surround a portion of the 2-2 side wall 221b and the 2-3 side wall 221c.

According to an embodiment, the electronic device 101 may have an intermediate state between the slide-in state of FIG. 2 (e.g., a fully closed state) and the slide-out state of FIG. 3 (e.g., a fully opened state). In the intermediate state of the electronic device 101, the distance between the 1-1 side wall 211a and the 2-1 side wall 221a may be shorter than the distance between the 1-1 side wall 211a and the 2-1 side wall 221a of the electronic device 101 in the fully opened state, and longer than the distance between the 1-1 side wall 211a and the 2-1 side wall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) and the height (length in the Y direction) of the display 203 and/or the distance between the 1-1 side wall 211a and the 2-1 side wall 221a may be changed based on the slide movement of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., an LED device) or various sensor modules.

According to an embodiment, the display 203 may be formed such that the size of a portion that may be seen from the front side of the housing 210 is changed based on the slide movement of the second housing portion 202. According to an embodiment, the display 203 may include a first display area A1 and a second display area A2 configured to be exposed to the outside of the electronic device 101 based on the slide movement of the second housing portion 202.

According to an embodiment, the first display area A1 may be disposed on the second housing portion 202. For example, the first display area A1 may be disposed on the second cover member 221 of the second housing portion 202. According to an embodiment, the second display area A2 extends from the first display area A1, and as the second housing portion 202 slides with respect to the first housing portion 201, the second display area A2 may be accommodated into the first housing portion 201, or may be visually exposed to the outside of the electronic device 101. According to an embodiment, as the electronic device 101 changes from the slide-in state to the slide-out state, the display 203 may extend in a downward direction (e.g., -Y direction) of the electronic device 101. For example, in the slide-out state of the electronic device 101, the second display area A2 may be visually exposed below (e.g., in the -Y direction) the display 203. According to an embodiment, as the electronic device 101 changes from the slide-in state to the slide-out state, the display 203 may extend in an upward direction (e.g., +Y direction) of the electronic device 101. For example, in the slide-out state of the electronic device 101, the second display area A2 may be visually exposed above (e.g., in the +Y direction) the display 203.

According to an embodiment, the second display area A2 may move while being substantially guided by an area (e.g., a curved surface 213a of FIG. 4) of the first housing portion 201, and may be accommodated into a space located inside the first housing portion 201 or exposed to the outside of the electronic device 101. According to an embodiment, the second display area A2 may move based on the slide movement of the second housing portion 202 in the first direction (e.g., the direction indicated by the arrow (1)). For example, while the second housing portion 202 slides, a portion of the second display area A2 may be deformed into a curved shape at a position corresponding to the curved surface 213a of the first housing portion 201.

According to an embodiment, when viewed from above the second cover member 221 (e.g., the front cover), when the electronic device 101 changes from the slide-in state to the slide-out state (e.g., when the second housing portion 202 slides to be extended with respect to the first housing portion 201), the second display area A2 may gradually be exposed to the outside of the first housing portion 201 and may form a substantially flat surface together with the first display area A1. According to an embodiment, the display 203 may be coupled to or disposed adjacent to a touch sensing circuit, a pressure sensor capable of measuring the intensity (pressure) of a touch, and/or a digitizer that detects a magnetic field-type stylus pen. According to an embodiment, regardless of the slide-in state or the slide-out state of the electronic device 101, a portion of the second display area A2 that is visually exposed may be located on a portion of the first housing portion (e.g., the curved surface 213a of FIG. 4), and the portion of the second display area A2 may maintain a curved shape at the position corresponding to the curved surface 213a.

According to an embodiment, the key input device 245 may be located in an area of the housing 210 (e.g., the first housing portion 201 and/or the second housing portion 202). Depending on the appearance and use state, the electronic device 101 may be designed such that the illustrated key input device 245 is omitted, or such that additional key input device(s) are included. According to an embodiment, the electronic device 101 may include a key input device that is not illustrated, for example, a home key button, or a touch pad disposed around the home key button. According to an embodiment, at least a portion of the key input device 245 may be disposed on the 1-1 side wall 211a, the 1-2 side wall 211b and/or the 1-3 side wall 211c of the first housing portion 201. According to an embodiment, at least a portion of the key input device 245 may be disposed on the 2-1 side wall 221a, the 2-2 side wall 221b and/or the 2-3 side wall 221c of the second housing portion 202.

According to an embodiment, the connector hole 243 may be omitted depending on the embodiment, and may accommodate a connector (e.g., a USB connector) for transmitting/receiving power and/or data to/from an external electronic device. According to an embodiment (not illustrated), the electronic device 101 may include a plurality of connector holes 243, and some of the plurality of connector holes 243 may function as a connector hole for transmitting/receiving an audio signal to/from an external electronic device. In the illustrated embodiment, the connector hole 243 is located in the second housing portion 202, but is not limited thereto, and the connector hole 243 or a connector hole not illustrated may be located in the first housing portion 201.

According to an embodiment, the audio modules 247a and 247b may include at least one speaker hole 247a, or at least one microphone hole 247b. One of the speaker holes 247a may be provided as a receiver hole for a voice call, and the other may be provided as an external speaker hole. The electronic device 101 includes a microphone for acquiring sound, and the microphone may acquire sound outside the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole, or may include a speaker from which the speaker hole 247a is excluded (e.g., a piezo speaker). According to an embodiment, the speaker hole 247a and the microphone hole 247b may be located in the first housing portion 201 and/or the second housing portion 202.

According to an embodiment, the camera modules 249a and 249b may include a first camera module 249a (e.g., a front camera) and a second camera module 249b (e.g., a rear camera). According to an embodiment, the electronic device 101 may include at least one of a wide-angle camera, a telephoto camera, or a macro camera, and according to an embodiment, may measure a distance to a subject by including an infrared projector and/or an infrared receiver. The camera modules 249a and 249b may include one or a plurality of lenses, an image sensor, and/or an image signal processor. The first camera module 249a may be disposed to face the same direction as the display 203 (e.g., +Z direction of FIG. 4). For example, the first camera module 249a may be disposed around the first display area A1 or in an area overlapping the display 203, and when disposed in the area overlapping the display 203, may capture a subject through the display 203. According to an embodiment, the first camera module 249a may not be visually exposed to the screen display area (e.g., the first display area A1), and may include a hidden under display camera (UDC). According to an embodiment, the second camera module 249b may capture a subject in a direction opposite to the first display area A1 (e.g., -Z direction of FIG. 4). According to an embodiment, the first camera module 249a and/or the second camera module 249b may be disposed on the second housing portion 202. According to an embodiment, the second camera module 249b may be formed in a plurality to provide various arrangements. For example, the plurality of second camera modules 249b may be arranged along a width direction (X-axis direction), which is a direction substantially perpendicular to the slide movement direction (e.g., Y-axis direction) of the electronic device 101. According to an embodiment, the plurality of second camera modules 249b may be arranged along the slide movement direction (e.g., Y-axis direction) of the electronic device 101. According to an embodiment, the plurality of second camera modules 249b may be arranged along N * M rows and columns like a matrix.

According to an embodiment, the second camera module 249b may not be visually exposed to the outside of the electronic device 101 in the slide-in state of the electronic device 101, and may capture the outside of the electronic device 101 in the slide-out state of the electronic device 101. According to an embodiment, the second camera module 249b may capture the outside of the electronic device 101 in the slide-in state and/or the slide-out state of the electronic device 101. For example, at least a portion of the housing 210 (e.g., the first rear plate 215 and/or the second rear plate 225 of FIG. 4) may be substantially transparent, and the second camera module 249b may capture the outside of the electronic device 101 through the first rear plate 215 and/or the second rear plate 225. According to an embodiment, the second camera module 249b may be visually exposed to the outside of the electronic device 101 in the slide-in state and the slide-out state of the electronic device 101, and may capture the outside. For example, the first housing portion 201 (e.g., the first rear plate 215 of FIG. 4) may include an opening 201a for the second camera module 249b.

According to an embodiment, an indicator (not illustrated) of the electronic device 101 may be disposed in the first housing portion 201 or the second housing portion 202, and may include a light emitting diode to provide state information of the electronic device 101 as a visual signal. The sensor modules 261a and 261b of the electronic device 101 may generate an electrical signal or data value corresponding to an internal operating state of the electronic device 101, or an external environmental state. The sensor modules 261a and 261b may include a proximity sensor, a fingerprint sensor and/or a biometric sensor (e.g., an iris/face recognition sensor or an HRM sensor). In an embodiment, the sensor modules 261a and 261b may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor modules 261a and 261b may be disposed in the first housing portion 201 and/or the second housing portion 202. For example, the sensor modules 261a and 261b may include a first sensor module 261a (e.g., a proximity sensor or an illuminance sensor) disposed on the front of the electronic device 101 and/or a second sensor module 261b (e.g., a heart rate monitoring (HRM) sensor) disposed on the rear of the electronic device 101.

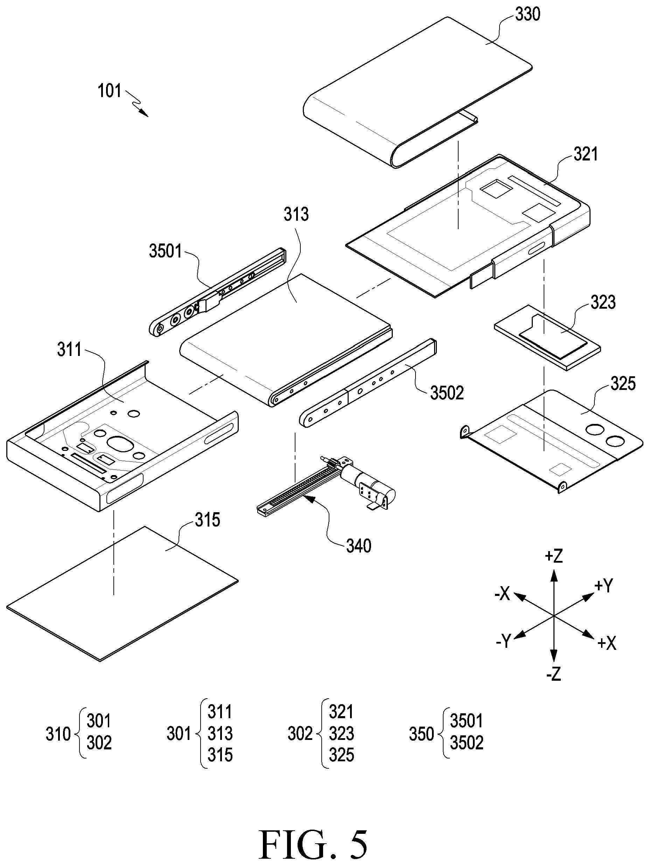

FIG. 4 is an exploded perspective view illustrating an electronic device according to an embodiment of the disclosure. The components described with reference to FIG. 4 may be partially or entirely the same as the components described with reference to FIGS. 1 to 3. The components described with reference to FIG. 4 may be partially or entirely the same as the components described with reference to FIGS. 5 to 16.

An electronic device 101 (e.g., the electronic device 101 of FIGS. 1 to 3) may include a first housing portion 201, a second housing portion 202, a display assembly 230 and a driving structure 240. The configurations of the first housing portion 201, the second housing portion 202 and the display assembly 230 of FIG. 4 may be entirely or partially the same as the configurations of the first housing portion 201, the second housing portion 202 and the display 203 of FIG. 2 and/or FIG. 3.

According to an embodiment, the first housing portion 201 may include a first cover member 211 (e.g., the first cover member 211 of FIGS. 2 and 3), a support member 213 and a first rear plate 215.

According to an embodiment, the first cover member 211 may accommodate at least a portion of the support member 213, and may accommodate a component (e.g., a battery 289) located on the support member 213. According to an embodiment, the first cover member 211 may be formed to surround at least a portion of the second housing portion 202. According to an embodiment, the first cover member 211 may protect components (e.g., the second circuit board 249 and the support member 213) located in the first housing portion 201 from external impacts. According to an embodiment, the second circuit board 249 electrically connected to electrical components (e.g., an actuator, a speaker, a SIM socket and/or a first circuit board 248) may be connected to the first cover member 211.

According to an embodiment, the support member 213 may be connected to the first cover member 211. For example, the support member 213 may be connected to the first cover member 211, and the second housing portion 202 may move relative to the first cover member 211 and/or the support member 213. According to an embodiment, the support member 213 may accommodate the battery 289. For example, the support member 213 may include a groove for accommodating the battery 289. The support member 213 may be connected to a battery cover 289a, and may surround at least a portion of the battery 289 together with the battery cover 289a. According to an embodiment, the support member 213 may include a curved portion 213a facing the display assembly 230.

According to an embodiment, the first rear plate 215 may form at least a portion of the appearance of the first housing portion 201 or the electronic device 101 substantially. For example, the first rear plate 215 may be coupled to the outer surface of the first cover member 211. According to an embodiment, the first rear plate 215 may provide a decorative effect on the appearance of the electronic device 101. The first rear plate 215 may be manufactured using at least one of metal, glass, synthetic resin, or ceramic.

According to an embodiment, the second housing portion 202 may include a second cover member 221 (e.g., the second cover member 221 of FIGS. 2 and 3), a rear cover 223 and a second rear plate 225.

According to an embodiment, the second cover member 221 may be connected to the first housing portion 201 through a guide rail 250, and may linearly reciprocate in one direction (e.g., the direction of the arrow (1) of FIG. 3) while being guided by the guide rail 250.

According to an embodiment, the second cover member 221 may support at least a portion of the display 231. For example, the second cover member 221 may include a first surface F1, and the first display area A1 of the display 231 may be substantially located on the first surface F1 to be maintained in a flat plate shape. According to an embodiment, the second cover member 221 may be formed of a metal material and/or a non-metal (e.g., polymer) material. According to an embodiment, the first circuit board 248 accommodating electronic components (e.g., the processor 120 and/or the memory 130 of FIG. 1) may be connected to the second cover member 221. According to an embodiment, the second cover member 221 may protect components (e.g., the first circuit board 248 and the rear cover 223) located in the second housing portion 202 from external impacts.

According to an embodiment, the rear cover 223 may protect a component (e.g., the first circuit board 248) located on the second cover member 221. For example, the rear cover 223 may be connected to the second cover member 221, and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed of an injection-molded product (e.g., an antenna carrier) of a dielectric material, the at least one antenna element 223a may be disposed on the outer surface of the rear cover 223 (e.g., a surface facing the -Z-axis direction). For example, the at least one antenna element 223a may include a laser direct structuring (LDS) antenna pattern formed on the outer surface of the rear cover 223. For example, the at least one antenna element 223a may be formed in an embedded manner during injection molding of the rear cover 223. For example, the at least one antenna element 223a may be electrically connected to a wireless communication circuit (e.g., the wireless communication module 192 of FIG. 1) disposed on the first circuit board 248, and may be configured to transmit or receive a wireless signal in a designated frequency band (e.g., a legacy band).

According to an embodiment, the second rear plate 225 may form at least a portion of the appearance of the second housing portion 202 or the electronic device 101 substantially. For example, the second rear plate 225 may be coupled to the outer surface of the second cover member 221. According to an embodiment, the second rear plate 225 may provide a decorative effect on the appearance of the electronic device 101. The second rear plate 225 may be manufactured using at least one of metal, glass, synthetic resin, or ceramic.

According to an embodiment, the display assembly 230 may include a display 231 (e.g., the display 203 of FIG. 2 and/or FIG. 3) and a multi-bar structure 232 supporting the display 231. According to an embodiment, the display 231 may be referred to as a flexible display, a foldable display and/or a rollable display. According to an embodiment, a structure supporting the first display area A1 of the display 231 may not be deformed. According to an embodiment, a structure supporting the second display area A2 may be deformed. A first deformation degree by an external force of a first structure (e.g., the second cover member 221) supporting the first display area A1 of the display 231 may be smaller than a second deformation degree by the external force of a second structure (e.g., the multi-bar structure 232) supporting the second display area A2 of the display 231. For example, the first display area A1 may be supported by the first surface F1 of the second cover member 221 or a plate not illustrated. The second display area A2 may be supported by the multi-bar structure 232. For example, the first deformation degree by the external force of the second cover member 221 may be smaller than the second deformation degree by the external force of the multi-bar structure 232. For example, the hardness of the second cover member 221 may be greater than the hardness of the multi-bar structure 232. For example, a first flexibility of the second cover member 221 may be smaller than a second flexibility of the multi-bar structure 232.

According to an embodiment, the multi-bar structure 232 may be connected or attached to at least a portion of the display 231 (e.g., the second display area A2). According to an embodiment, as the second housing portion 202 slides, the multi-bar structure 232 may move with respect to the first housing portion 201. In the slide-in state of the electronic device 101 (e.g., FIG. 2), the multi-bar structure 232 may be mostly accommodated inside the first housing portion 201, and may be located between the first cover member 211 and the second cover member 221. According to an embodiment, at least a portion of the multi-bar structure 232 may move corresponding to the curved surface 213a located at the edge of the support member 213. According to an embodiment, the multi-bar structure 232 may be referred to as a display support member or a support structure, and may be in the form of a single elastic plate.

According to an embodiment, the driving structure 240 may move the second housing portion 202 relatively with respect to the first housing portion 201. For example, the driving structure 240 may include an actuator 241 configured to generate a driving force for the slide movement of the second housing portion 202 with respect to the first housing portion 201. The driving structure 240 may include a gear 244 (e.g., a pinion) connected to the actuator 241 and a rack 242 configured to mesh with the gear. Referring to FIG. 4, components of the driving structure 240 (e.g., the actuator 241, the rack 242, and the gear 244) inverted (e.g., facing the -Z-axis direction) within the circle P1 are illustrated.

According to an embodiment, the housing in which the rack 242 is located and the housing in which the actuator 241 is located may be different. According to an embodiment, the actuator 241 may be connected to the first housing portion 201, and the rack 242 may be connected to the second housing portion 202. According to an embodiment, the actuator 241 may be connected to the second housing portion 202, and the rack 242 may be connected to the first housing portion 201.

According to an embodiment, the actuator 241 may be controlled by a processor (e.g., the processor 120 of FIG. 1). For example, the processor 120 may include an actuator driver driving circuit, and may transmit a pulse width modulation (PWM) signal for controlling the speed of the actuator 241 and/or the torque of the actuator 241 to the actuator 241. According to an embodiment, the actuator 241 may be electrically connected to a processor (e.g., the processor 120 of FIG. 1) located on a circuit board (e.g., the first circuit board 248 of FIG. 4) using a flexible printed circuit board.

According to an embodiment, the second housing portion 202 may accommodate the first circuit board 248 (e.g., a main board). According to an embodiment, a processor, memory, and/or an interface may be mounted on the first circuit board 248. The processor may include, for example, one or more of a central processing unit, an application processor, a graphics processing unit, an image signal processor, a sensor hub processor, or a communication processor. According to various embodiments, the first circuit board 248 may include a flexible printed circuit board type radio frequency cable (FRC). The first circuit board 248 may be disposed on at least a portion of the second cover member 221, and may be electrically connected to an antenna module (e.g., the antenna module 197 of FIG. 1) and a communication module (e.g., the communication module 190 of FIG. 1).

According to an embodiment, the memory may include, for example, a volatile memory or a non-volatile memory.

According to an embodiment, the interface may include, for example, a high definition multimedia interface (HDMI), a universal serial bus (USB) interface, an SD card interface, and/or an audio interface. The interface may, for example, electrically or physically connect the electronic device 101 to an external electronic device, and may include a USB connector, an SD card/MMC connector, or an audio connector.

According to an embodiment, the electronic device 101 may include a second circuit board 249 (e.g., a sub circuit board) spaced apart from the first circuit board 248 (e.g., a main circuit board) within the first housing portion 201. The second circuit board 249 may be electrically connected to the first circuit board 248 through a flexible board. The second circuit board 249 may be electrically connected to electrical components disposed in an end area of the electronic device 101 such as the battery 289 or a speaker and/or a SIM socket to transmit signals and power. According to an embodiment, the second circuit board 249 may accommodate an antenna member 271 (e.g., a coil) or may be connected to the antenna member 271. The antenna member 271 may include a multi-function coil (MFC) antenna including a wireless charging antenna for a wireless charging function, a near field communication (NFC) antenna for an NFC function, and/or a magnetic secure transmission (MST) antenna for performing an electronic payment function. For example, the battery 289 may receive power from an external electronic device using the antenna member 271 for wireless charging. According to an embodiment, the battery 289 may transmit power to an external electronic device using the antenna member 271 for wireless charging.

According to an embodiment, the battery 289 is a device for supplying power to at least one component of the electronic device 101, and may include a non-rechargeable primary battery, a rechargeable secondary battery, or a fuel cell. The battery 289 may be integrally disposed inside the electronic device 101, or may be disposed detachably from the electronic device 101. According to an embodiment, the battery 289 may be formed as a single integrated battery, or may include a plurality of detachable batteries. According to an embodiment, the battery 289 may be located on the support member 213. For example, the battery 289 may be surrounded by the support member 213 and the battery cover 289a. According to an embodiment, it is located within the second housing portion 202, and may slide together with the second housing portion 202.

According to an embodiment, the guide rail 250 may guide the movement of the multi-bar structure 232. For example, the multi-bar structure 232 may slide along a slit 251 formed in the guide rail 250. According to an embodiment, the guide rail 250 may be connected to the first housing portion 201. For example, the guide rail 250 may be connected to the first cover member 211 and/or the support member 213. According to an embodiment, the slit 251 may be referred to as a groove or recess formed on the inner surface of the guide rail 250. Referring to FIG. 4, an enlarged guide rail 250 within the circle P2 is illustrated.

According to an embodiment, the guide rail 250 may guide the movement of the multi-bar structure 232 when the actuator 241 is driven. For example, when the actuator 241 is driven, the multi-bar structure 232 may move along the guide rail 250. For example, the multi-bar structure 232 may move along a guide structure (e.g., the guide 350 of FIGS. 1 to 16). For example, the multi-bar structure 232 may move together with at least a portion (e.g., the second frame 352 of FIGS. 1 to 16) of the guide structure (e.g., the guide 350 of FIGS. 1 to 16).

According to an embodiment, when the electronic device 101 changes from the slide-in state to the slide-out state, at least a portion of the second housing portion 202 may slide to be exposed to the outside from the first housing portion 201 through the driving of the actuator 241. For example, the gear 244 may rotate in a first rotation direction based on the driving of the actuator 241. As the rack 242 is fixed on the second cover member 221 of the second housing portion 202, the second housing portion 202 may slide to be exposed to the outside of the first housing portion 201 based on the slide movement of the rack 242 toward the slide-out direction.

According to an embodiment, when the electronic device 101 changes from the slide-in state to the slide-out state, the multi-bar structure 232 may move along an inner portion 252 of the guide rail 250. The guide rail 250 may guide the movement of the multi-bar structure 232, and the second housing portion 202 may slide to be extended with respect to the first housing portion 201. At least a portion of the display assembly 230 that has been accommodated between the first cover member 211 and the support member 213 may extend to the front.

According to an embodiment, when the electronic device 101 changes from the slide-out state to the slide-in state, at least a portion of the second housing portion 202 may slide to be inserted into the first housing portion 201 through the driving of the actuator 241. For example, the gear 244 may rotate in a second rotation direction opposite to the first rotation direction based on the driving of the actuator 241. As the rack 242 is fixed on the second cover member 221 of the second housing portion 202, the second housing portion 202 may slide to enter the inside of the first housing portion 201 based on the slide movement of the rack 242 toward the slide-in direction.

According to an embodiment, when the electronic device 101 changes from the slide-out state to the slide-in state, an outer portion 253 of the guide rail 250 may provide a force to the bent multi-bar structure 232. The multi-bar structure 232 receiving the force may move along the slit 251 of the guide rail 250, and at least a portion of the second housing portion 202 may slide to be accommodated in the first housing portion 201. At least a portion of the display assembly 230 may be accommodated between the first cover member 211 and the support member 213.

According to an embodiment, the electronic device 101 may be configured to stop in a designated intermediate state between the slide-in state and the slide-out state by controlling the driving of the actuator 241 (free stop function). According to an embodiment, the electronic device 101 may change to the slide-in state, the intermediate state or the slide-out state through user manipulation in a state in which a driving force is not provided to the actuator 241.

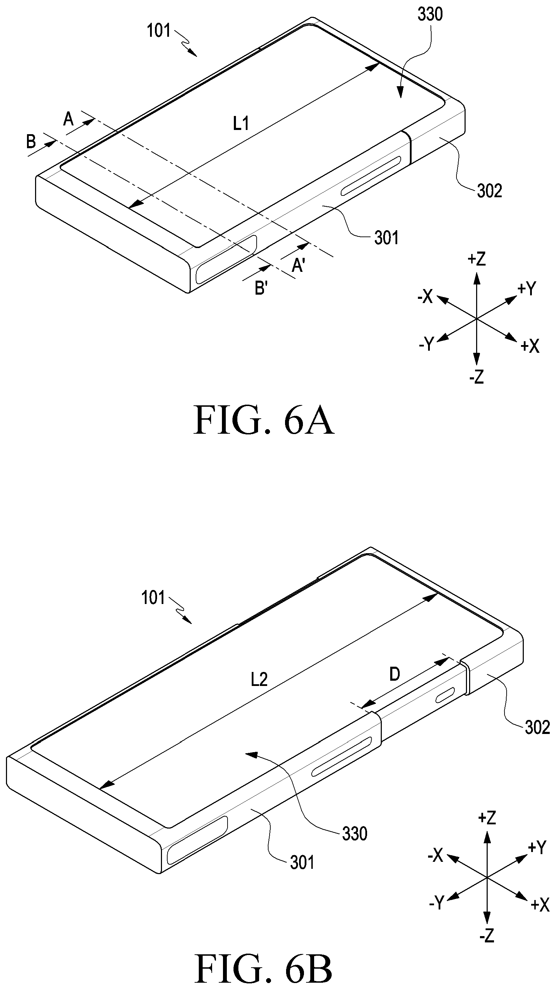

FIG. 5 is a view illustrating some components by exploding an electronic device 101. The components described with reference to FIG. 5 may be partially or entirely the same as the components described with reference to FIGS. 1 to 4. The components described with reference to FIG. 5 may be partially or entirely the same as the components described with reference to FIGS. 6A to 16.

According to an embodiment, the electronic device 101 may include a housing 310. The housing 310 may include a first housing 301 and a second housing 302 movably disposed with respect to the first housing 301. The description of the housing 210 described with reference to FIGS. 1 to 4 may be equally applied to the description of the housing 310.

According to an embodiment, the first housing 301 may include a first housing body 311. The first housing body 311 may form the surface of the first housing 301. The description of the first cover member 211 described with reference to FIGS. 1 to 4 may be equally applied to the description of the first housing body 311.

According to an embodiment, the first housing 301 may include a support member 313. The support member 313 may be disposed inside the first housing body 311. The support member 313 may accommodate a battery (e.g., the battery 289 of FIG. 4). The support member 313 may be referred to as a "case". The support member 313 may be referred to as an "accommodating member". The support member 313 may be referred to as a "cover member". The description of the support member 213 described with reference to FIGS. 1 to 4 may be equally applied to the description of the support member 313.

According to an embodiment, the first housing 301 may include a first rear cover 315. The first rear cover 315 may be coupled to the first housing body 311. The description of the first rear plate 215 described with reference to FIGS. 1 to 4 may be equally applied to the description of the first rear cover 315.

According to an embodiment, the second housing 302 may include a second housing body 321. The second housing body 321 may form the surface of the second housing 302. The description of the second cover member 221 described with reference to FIGS. 1 to 4 may be equally applied to the description of the second housing body 321.

According to an embodiment, the electronic device 101 may include a board 323. The board 323 may be disposed inside the second housing body 321. The board 323 may move together with the second housing 302.

According to an embodiment, the second housing 302 may include a second rear cover 325. The second rear cover 325 may be coupled to the second housing body 321. The description of the second rear plate 225 described with reference to FIGS. 1 to 4 may be equally applied to the description of the second rear cover 325.

According to an embodiment, the electronic device 101 may include a display 330. At least a portion of the display 330 may move together with the second housing 302. At least a portion of the display 330 may be configured to be foldable or unfoldable. The display 330 may be referred to as a "flexible display".

According to an embodiment, the electronic device 101 may include a driving device 340. The driving device 340 may provide power for the movement of the second housing 302. The description of the driving structure 240 described with reference to FIGS. 1 to 4 may be equally applied to the description of the driving device 340.

According to an embodiment, the electronic device 101 may include a guide 350. The guide 350 may be configured to guide the movement of the second housing 302. At least a portion of the guide 350 may be fixed to the first housing 301. At least a portion of the guide 350 may move together with the second housing 302. The guide 350 may include a plurality of guides 3501 and 3502. The plurality of guides 3501 and 3502 may be spaced apart from each other. The guide 350 may include a first guide 3501 and a second guide 3502 spaced apart from each other.

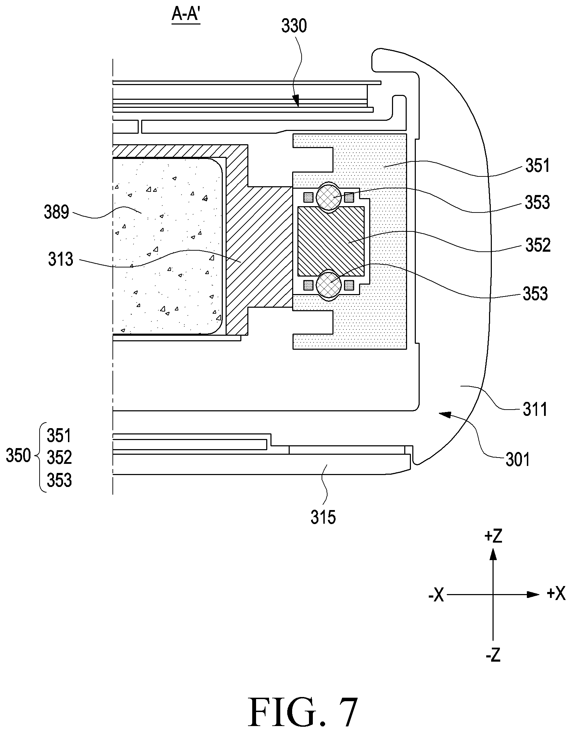

FIG. 6A is a view illustrating an electronic device 101 in a first operating state. FIG. 6B is a view illustrating an electronic device 101 in a second operating state. The components described with reference to FIGS. 6A and 6B may be partially or entirely the same as the components described with reference to FIGS. 1 to 5. The components described with reference to FIGS. 6A and 6B may be partially or entirely the same as the components described with reference to FIGS. 7 to 16.

According to an embodiment, the second housing 302 may be movably disposed with respect to the first housing 301. The display 330 may move together with the second housing 302. For example, when changing from the operating state of FIG. 6A to the operating state of FIG. 6B, the second housing 302 may move by a movement distance D with respect to the first housing 301. For example, when changing from the operating state of FIG. 6A to the operating state of FIG. 6B, the length of the display 330 visually exposed to the outside of the electronic device 101 may change from a first length L1 to a second length L2.

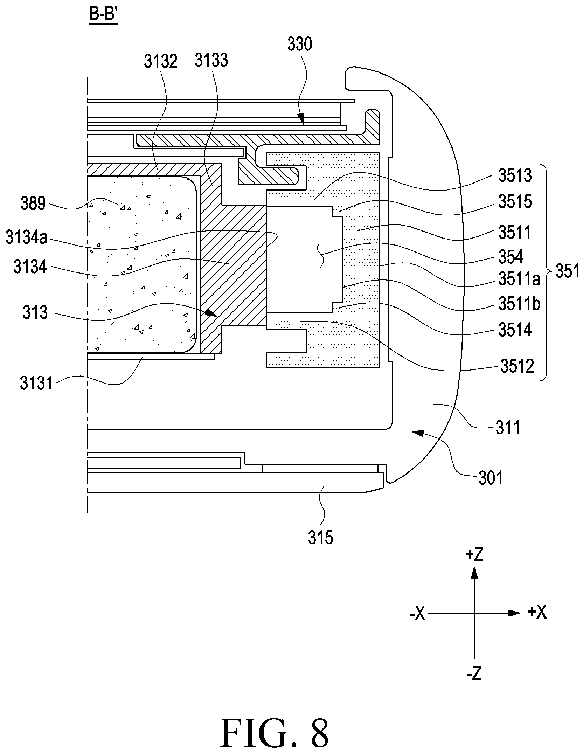

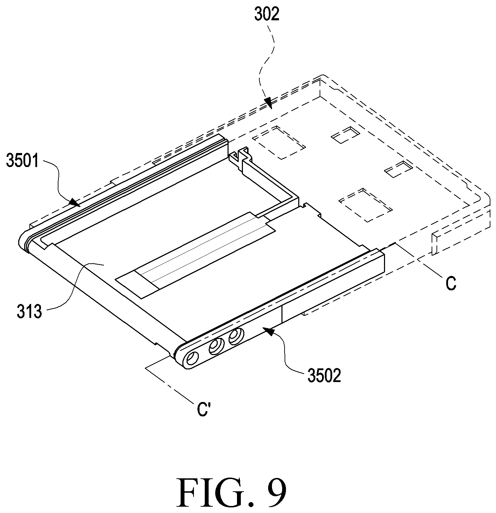

FIG. 7 is a portion of a cross-sectional view taken along the reference line A-A' illustrated in FIG. 6A. FIG. 8 is a portion of a cross-sectional view taken along the reference line B-B' illustrated in FIG. 6B. The components described with reference to FIGS. 7 and 8 may be partially or entirely the same as the components described with reference to FIGS. 1 to 6B. The components described with reference to FIGS. 7 and 8 may be partially or entirely the same as the components described with reference to FIGS. 9 to 16.

According to an embodiment, the support member 313 may be disposed inside the first housing 301. The electronic device 101 may include a battery 389. The description of the battery 289 described with reference to FIGS. 1 to 4 may be equally applied to the description of the battery 389. The battery 389 may be disposed inside the support member 313.

According to an embodiment, at least a portion of the guide 350 may be disposed inside the first housing 301. The guide 350 may face the first housing body 311. According to an embodiment, the guide 350 may be referred to as a "linear motion guide (LM guide)". For example, the guide 350 may guide the second housing 302 to linearly move with respect to the first housing 301.

According to an embodiment, the guide 350 may include a first frame 351. The first frame 351 may be fixed to the first housing 301. The first frame 351 may extend along the movement direction of the second housing 302. The first frame 351 may face the support member 313. The first frame 351 may face the first housing body 311. The first frame 351 may be referred to as a "block". The first frame 351 may be referred to as a "rail". The first frame 351 may be referred to as a "guide frame".

According to an embodiment, the guide 350 may include a second frame 352. The second frame 352 may be movably disposed with respect to the first frame 351. The second frame 352 may extend along the extension direction of the first frame 351. The second frame 352 may extend along the movement direction of the second housing 302. The second frame 352 may be disposed inside the first frame 351. The second frame 352 may face the support member 313. The second frame 352 may include a 2-1 frame 352-1 and a 2-2 frame 352-2. The 2-1 frame 352-1 and the 2-2 frame 352-2 may be spaced apart from each other in a direction substantially perpendicular to the direction in which the second housing 302 moves. The 2-1 frame 352-1 and the 2-2 frame 352-2 may have the same structure and shape as each other. The 2-1 frame 352-1 may be coupled to a first side portion of the second housing 302, and the 2-2 frame 352-2 may be coupled to a second side portion of the second housing 302 opposite to the first side portion. The second frame 352 may be referred to as a "slider". The second frame 352 may be referred to as a "mover". The second frame 352 may be referred to as a "carrier". The second frame 352 may be referred to as a "conveyer". The second frame 352 may be referred to as a "rail".

According to an embodiment, the guide 350 may include a bearing 353. The bearing 353 may be disposed inside the first frame 351. The bearing 353 may be disposed between the first frame 351 and the second frame 352.

According to an embodiment, the support member 313 may include a first support wall 3131 and a second support wall 3132. The first support wall 3131 and the second support wall 3132 may be spaced apart from each other. The battery 389 may be disposed between the first support wall 3131 and the second support wall 3132. The battery 389 may be seated on the first support wall 3131. The second support wall 3132 may cover the battery 389.

According to an embodiment, the support member 313 may include a support side wall 3133. The support side wall 3133 may connect the first support wall 3131 and the second support wall 3132. The support side wall 3133 may cover the side surface of the battery 389. The support member 313 may include a support protrusion 3134. The support protrusion 3134 may protrude from the support side wall 3133. The support protrusion 3134 may protrude from the support side wall 3133 toward the guide 350. The support side wall 3133 may protrude toward the first frame 351. The support member 313 may include a shielding surface 3134a facing the first frame 351. The shielding surface 3134a may seal the guide space 354. The shielding surface 3134a may be formed on the support protrusion 3134.

According to an embodiment, the first frame 351 may include a frame side wall 3511. The frame side wall 3511 may face the first housing body 311. The frame side wall 3511 may be spaced apart from the support protrusion 3134. The frame side wall 3511 may be disposed between the support member 313 and the first housing body 311. The frame side wall 3511 may include a first surface 3511a and a second surface 3511b. The first surface 3511a may face the first housing body 311. The second surface 3511b may face the support member 313. The first surface 3511a may form the outer surface of the first frame 351. The second surface 3511b may form the inner surface of the first frame 351.

According to an embodiment, the first frame 351 may include a first frame wall 3512. The first frame 351 may include a second frame wall 3513. The first frame wall 3512 and the second frame wall 3513 may be spaced apart from each other. The frame side wall 3511 may connect the first frame wall 3512 and the second frame wall 3513. The first frame wall 3512 may extend from the frame side wall 3511 toward the support member 313. The second frame wall 3513 may extend from the frame side wall 3511 toward the support member 313.

According to an embodiment, the first frame 351 may include a first stepped portion 3514 and a second stepped portion 3515. The first stepped portion 3514 may be connected to each of the frame side wall 3511 and the first frame wall 3512. The first stepped portion 3514 may protrude from the frame side wall 3511 toward the guide space 354. The second stepped portion 3515 may be connected to each of the frame side wall 3511 and the second frame wall 3513. The second stepped portion 3515 may protrude from the frame side wall 3511 toward the guide space 354. The bearing 353 may be disposed between the stepped portions 3514 and 3515 and the support member 313. The second frame 352 may be disposed between the frame side wall 3511 and the support member 313.

According to an embodiment, the guide 350 may include a guide space 354. The guide space 354 may be formed between the first frame 351 and the support member 313. The guide space 354 may be formed between the frame side wall 3511 and the support protrusion 3134. The guide space 354 may be formed between the first frame wall 3512 and the second frame wall 3513. The second frame 352 may be movably disposed inside the guide space 354. The guide space 354 may be sealed by the shielding surface 3134a.

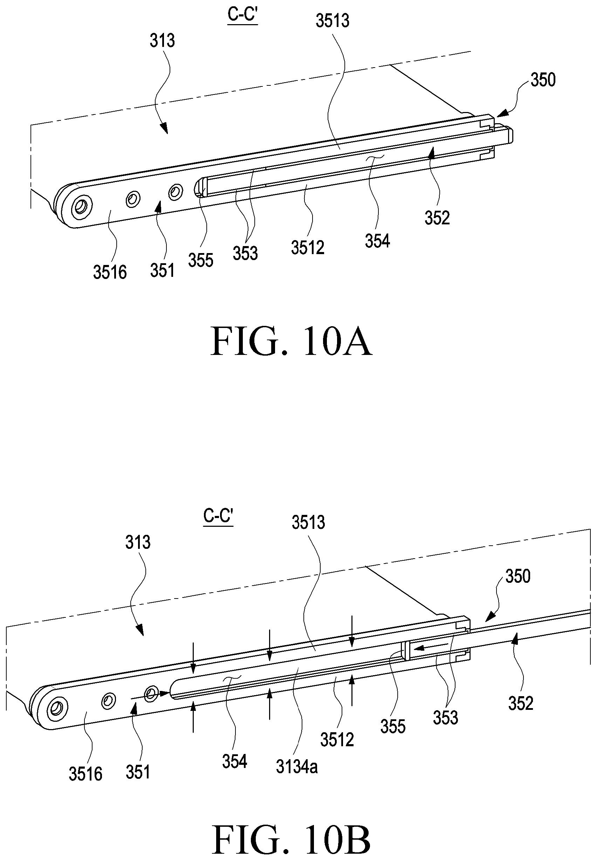

FIG. 9 is a view illustrating a portion of an electronic device 101 with a portion of a first housing 301 removed, with a second housing 302 viewed through. The components described with reference to FIG. 9 may be partially or entirely the same as the components described with reference to FIGS. 1 to 8. The components described with reference to FIG. 9 may be partially or entirely the same as the components described with reference to FIGS. 10 to 16.

According to an embodiment, the support member 313 may be disposed between the first guide 3501 and the second guide 3502. The movement of the second housing 302 may be guided by the first guide 3501 and the second guide 3502.

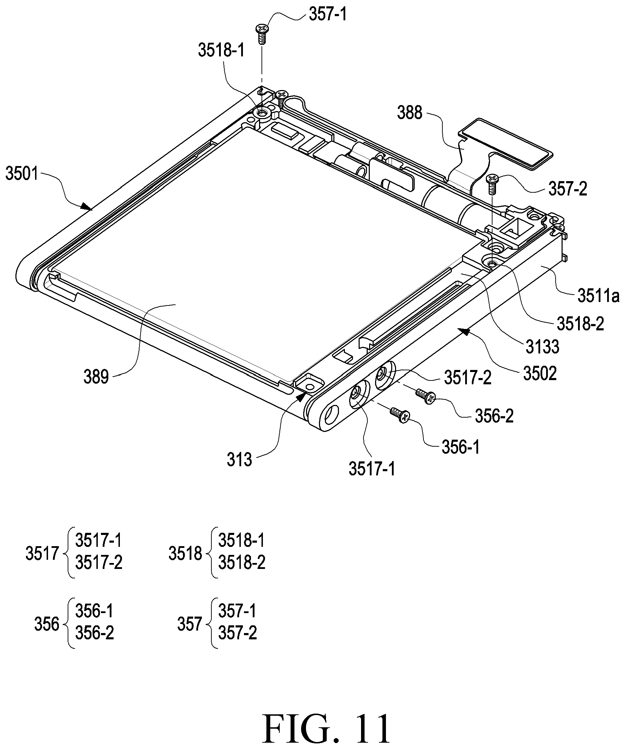

FIG. 10A is a view illustrating a cross-sectional view taken along the reference line C-C' illustrated in FIG. 9 when the electronic device 101 is in a first operating state. FIG. 10B is a cross-sectional view illustrating a cross-sectional view taken along the reference line C-C' illustrated in FIG. 9 when the electronic device 101 is in a second operating state. The components described with reference to FIGS. 10A and 10B may be partially or entirely the same as the components described with reference to FIGS. 1 to 9. The components described with reference to FIGS. 10A and 10B may be partially or entirely the same as the components described with reference to FIGS. 11 to 16.

According to an embodiment, the second frame 352 may be movably disposed inside the first frame 351. The guide space 354 may be formed inside the first frame 351. The second frame 352 may be movably disposed in the guide space 354.

According to an embodiment, the bearing 353 may be disposed between the first frame wall 3512 and the second frame 352. The bearing 353 may move together with the second frame 352. The bearing 353 may move along the first frame wall 3512. The bearing 353 may be a ball bearing.

According to an embodiment, the bearing 353 may be disposed between the second frame wall 3513 and the second frame 352. The bearing 353 may move together with the second frame 352. The bearing 353 may move along the second frame wall 3513. The bearing 353 may be a ball bearing.

According to an embodiment of the disclosure, unlike illustrated in FIGS. 1 to 16, the bearing 353 may be fixed to the first frame 351. The bearing 353 may support the second frame 352. For example, the bearing 353 may be disposed between the first frame 351 and the second frame 352, and may be fixed to the first frame 351 and not move when the second frame 352 moves with respect to the first frame 351. The bearing 353 may include a roller or a ball bearing.

According to an embodiment, the guide 350 may include a head 355. The head 355 may move together with the second frame 352. The bearing 353 may be coupled to the head 355. The bearing 353 may move together with the head 355.

According to an embodiment, the first frame 351 may include a frame body 3516. The frame body 3516 may be coupled to the support member 313. The frame body 3516 may be fixed to the first housing 301 through the support member 313. The first frame wall 3512 and the second frame wall 3513 may extend from the frame body 3516.

According to an embodiment, the second frame 352 may move with respect to the first frame 351. When the second frame 352 moves with respect to the first frame 351, the shielding surface 3134a may face the guide space 354.

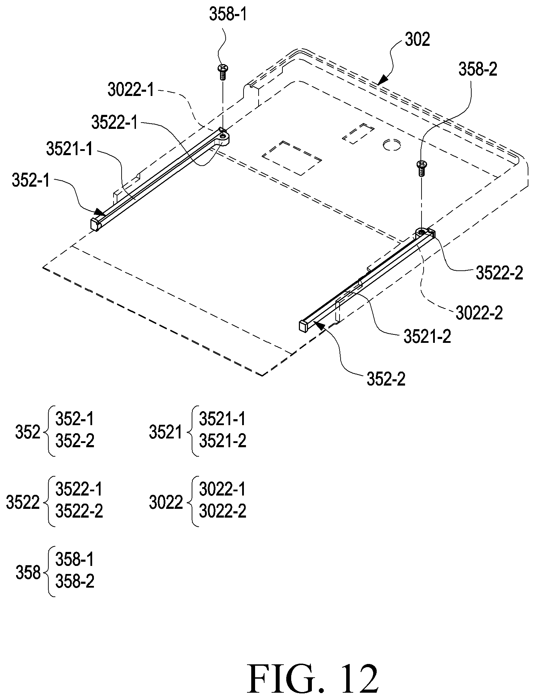

FIG. 11 is a view describing the coupling between a support member 313 and guides 3501 and 3502. The components described with reference to FIG. 11 may be partially or entirely the same as the components described with reference to FIGS. 1 to 10. The components described with reference to FIG. 11 may be partially or entirely the same as the components described with reference to FIGS. 12 to 16.

According to an embodiment, the guides 3501 and 3502 may be coupled to the support member 313. The first guide 3501 may be coupled to a first side portion of the support member 313, and the second guide 3502 may be coupled to a second side portion of the support member 313. The description of the coupling between the guide 350 and the support member 313, which is described taking the second guide 3502 as an example, may be applied in the same manner to the coupling between the first guide 3501 and the support member 313.

According to an embodiment, the guide 350 may include a first coupling portion 3517. The first coupling portion 3517 may be opened on the first surface 3511a of the first frame 351. The first coupling portion 3517 may include a plurality of coupling portions 3517-1 and 3517-2. For example, the first coupling portion 3517 may include a 1-1 coupling portion 3517-1 and a 1-2 coupling portion 3517-2 spaced apart from each other. The guide 350 may include a first coupling member 356 passing through the first coupling portion 3517. The first frame 351 may be fixed to the support member 313 by the first coupling member 356. The first coupling member 356 may include a plurality of first coupling members 356-1 and 356-2. For example, the first coupling member 356 may include a 1-1 coupling member 356-1 passing through the 1-1 coupling portion 3517-1 and a 1-2 coupling member 356-2 passing through the 1-2 coupling portion 3517-2.

According to an embodiment, the guide 350 may include a second coupling portion 3518. The second coupling portion 3518 may face the second support wall 3132. The second coupling portion 3518 may extend from the second frame wall 3513 to the upper side of the second support wall 3132. The second coupling portion 3518 may include a plurality of second coupling portions 3518-1 and 3518-2. For example, the second coupling portion 3518 may include a 2-1 coupling portion 3518-1, which is a portion of the first guide 3501, and a 2-2 coupling portion 3518-2, which is a portion of the second guide 3502. The guide 350 may include a second coupling member 357 passing through the second coupling portion 3518. The second coupling member 357 may pass through the second coupling portion 3518 and the second support wall 3132. The first frame 351 may be fixed to the support member 313 by the second coupling member 357. The second coupling member 357 may include a plurality of second coupling members 357-1 and 357-2. For example, the second coupling member 357 may include a 2-1 coupling member 357-1 passing through the 2-1 coupling portion 3518-1 and a 2-2 coupling member 357-2 passing through the 2-2 coupling portion 3518-2.

According to an embodiment, the electronic device 101 may include a flexible printed circuit board 388. The flexible printed circuit board 388 may connect the battery 389 and a board (e.g., the board 323 of FIG. 5). At least a portion of the flexible printed circuit board 388 may be disposed inside the support member 313.

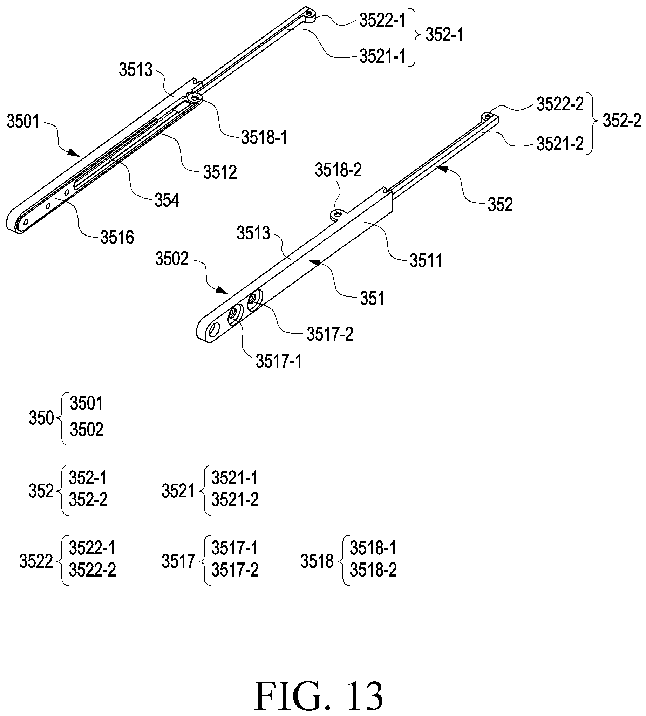

FIG. 12 is a view describing the coupling between a second housing 302 and a second frame 352. The components described with reference to FIG. 12 may be partially or entirely the same as the components described with reference to FIGS. 1 to 11. The components described with reference to FIG. 12 may be partially or entirely the same as the components described with reference to FIGS. 13 to 16.

According to an embodiment, the second frame 352 may be fixed to the second housing 302. The second frame 352 may move together with the second housing 302.

According to an embodiment, the second frame 352 may include a 2-1 frame 352-1 and a 2-2 frame 352-2. The 2-1 frame 352-1 and the 2-2 frame 352-2 may be spaced apart from each other. The 2-1 frame 352-1 and the 2-2 frame 352-2 may be coupled to different side portions of the second housing 302.

According to an embodiment, the second frame 352 may include a second frame body 3521. The second frame body 3521 may extend along the movement direction of the second housing 302. The second frame body 3521 may include a 2-1 frame body 3521-1, which is a portion of the 2-1 frame 352-1, and a 2-2 frame body 3521-2, which is a portion of the 2-2 frame 352-2. The second frame 352 may include a second frame protrusion 3522. The second frame protrusion 3522 may protrude from the second frame body 3521. The second frame protrusion 3522 may include a 2-1 frame protrusion 3522-1 protruding from the 2-1 frame body 3521-1 and a 2-2 frame protrusion 3522-2 protruding from the 2-2 frame body 3521-2.

According to an embodiment, the second housing 302 may include a frame coupling portion 3022. The frame coupling portion 3022 may correspond to the second frame 352. The frame coupling portion 3022 may include a plurality of frame coupling portions 3022. For example, the frame coupling portion 3022 may include a first frame coupling portion 3022-1 corresponding to the 2-1 frame 352-1 and a second frame coupling portion 3022-2 corresponding to the 2-2 frame 352-2.

According to an embodiment, the guide 350 may include a third coupling member 358 passing through the second frame 352. The third coupling member 358 may pass through the second frame protrusion 3522 and the frame coupling portion 3022. The second frame 352 may be fixed to the second housing 302 by the third coupling member 358. The third coupling member 358 may include a plurality of third coupling members 358-1 and 358-2. For example, the third coupling member 358 may include a 3-1 coupling member 358-1 passing through the 2-1 frame 352-1 and a 3-2 coupling member 358-2 passing through the 2-2 frame 352-2.

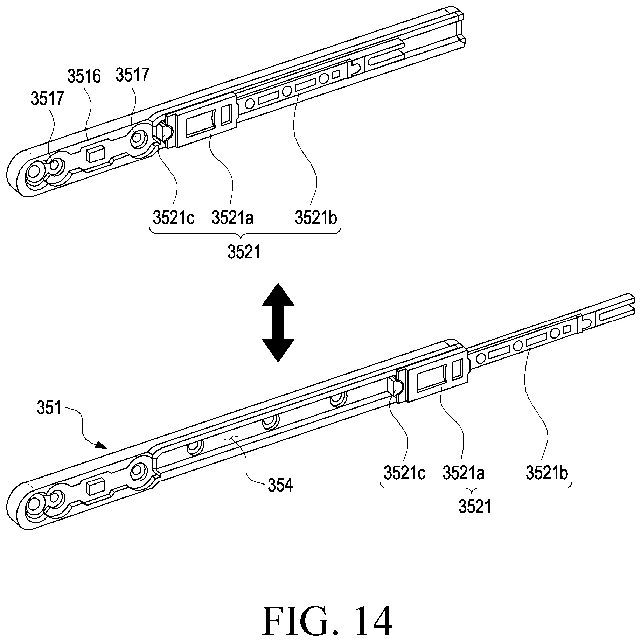

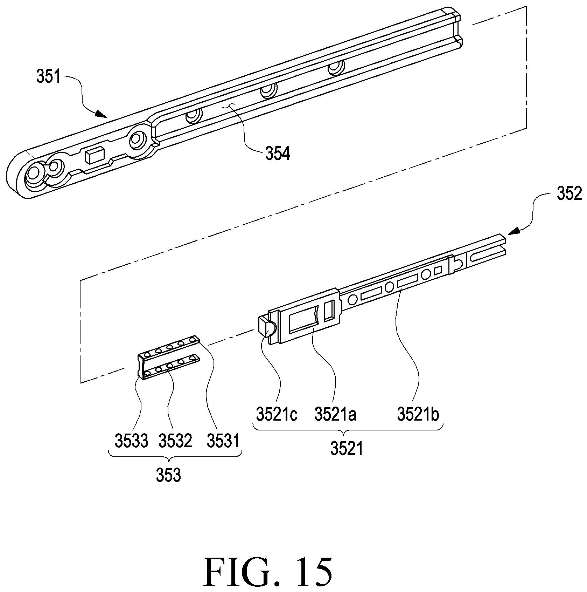

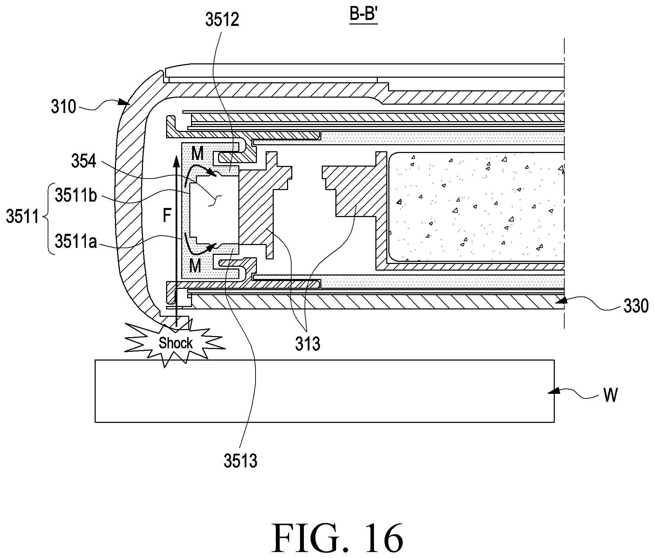

FIG. 13 is a view illustrating a guide 350. FIG. 14 is a view describing the operation of a guide 350. FIG. 15 is an exploded view illustrating a guide 350. The components described with reference to FIGS. 13 to 15 may be partially or entirely the same as the components described with reference to FIGS. 1 to 12. The components described with reference to FIGS. 13 to 15 may be partially or entirely the same as the components described with reference to FIG. 16.

According to an embodiment, the second frame 352 may be movably disposed between the first frame wall 3512 and the second frame wall 3513. The first coupling portion 3517 may be opened in the first frame body 3516. The second coupling portion 3518 may protrude from the second frame wall 3513.

According to an embodiment, the second frame body 3521 may be movably disposed in the guide space 354. The second frame protrusion 3522 may protrude to the outside of the guide space 354.

According to an embodiment, the second frame body 3521 may include a first portion 3521a, a second portion 3521b and a third portion 3521c. The first portion 3521a, the second portion 3521b and the third portion 3521c may be movably disposed inside the first frame 351. The first portion 3521a and the second portion 3521b may be located between the first frame wall 3512 and the second frame wall 3513. A first width of the first portion 3521a between the first frame wall 3512 and the second frame wall 3513 may be greater than a second width of the second portion 3521b between the first frame wall 3512 and the second frame wall 3513. The third portion 3521c may be located between the first portion 3521a and the first frame body 3516. The third portion 3521c may be coupled to the bearing 353.

According to an embodiment, the bearing 353 may include a first bearing 3531 and a second bearing 3532. The first bearing 3531 may be disposed between the first frame wall 3512 and the first portion 3521a. The second bearing 3532 may be disposed between the second frame wall 3513 and the first portion 3521a. The first bearing 3531 and the second bearing 3532 may be ball bearings, and may include a roller. The bearing 353 may include a connector 3533. The connector 3533 may connect the first bearing 3531 and the second bearing 3532. The connector 3533 may be coupled to the third portion 3521c. The bearing 353 may move together with the second frame 352.

FIG. 16 is a portion of a cross-sectional view taken along the reference line B-B' illustrated in FIG. 6A. The components described with reference to FIG. 16 may be partially or entirely the same as the components described with reference to FIGS. 1 to 15.

According to an embodiment, in the guide 350 according to an embodiment of the disclosure, the frame side wall 3511 is disposed to face the housing 310, and a sealed guide space 354 may be formed between the support member 313 and the guide 350. The guide space 354 may be formed between the second surface 3511b and the support member 313, and may be formed between the first frame wall 3512 and the second frame wall 3513. The first surface 3511a of the frame side wall 351 may be disposed to face the housing 310.

The electronic device 101 according to an embodiment of the disclosure may reduce the introduction of foreign substances into the guide space 354 in which the second frame 352 is moved, due to the structure of the guide 350 and the support member 313 described above.

The electronic device 101 according to an embodiment of the disclosure may reduce the magnitude of a bending momentum M caused by a force F transmitted into the electronic device 101 when a shock occurs between the electronic device 101 and an external object W, due to the structure of the guide 350 and the support member 313 described above.

An electronic device may include a first housing and a second housing movably disposed with respect to the first housing. The electronic device may include a guide for facilitating the movement of the second housing. A space may be formed inside the guide, and the introduction of foreign substances into the space formed inside the guide may reduce the lifespan of the electronic device.

The problem to be solved by the disclosure may be to reduce the introduction of foreign substances into the inside of the guide.

The problem to be solved by the disclosure may be to improve the impact resistance of the guide.

The problem to be solved by the disclosure is not limited to the above-mentioned problems, and may be variously determined within a range that does not depart from the spirit and scope of the disclosure.

The electronic device according to various embodiments of the disclosure may reduce the introduction of foreign substances into the inside of the guide by forming a sealed space between the guide and the support member.

The electronic device according to various embodiments of the disclosure may reduce deformation of the guide due to external impacts through the structure of the guide and the support member.

The effects obtainable from the disclosure are not limited to the effects mentioned above, and other effects not mentioned may be clearly understood by those of ordinary skill in the art to which the disclosure pertains from the following description.

An electronic device (e.g., 101 of FIGS. 1 to 16) according to an embodiment of the disclosure may include a first housing (e.g., 301 of FIGS. 1 to 16).

The electronic device (e.g., 101 of FIGS. 1 to 16) according to an embodiment of the disclosure may include a second housing (e.g., 302 of FIGS. 1 to 16) movably disposed with respect to the first housing (e.g., 301 of FIGS. 1 to 16).

The electronic device (e.g., 101 of FIGS. 1 to 16) according to an embodiment of the disclosure may include a flexible display (e.g., 330 of FIGS. 1 to 16) movably disposed together with the second housing (e.g., 302 of FIGS. 1 to 16), wherein at least a portion of the flexible display is configured to be foldable or unfoldable.

The electronic device (e.g., 101 of FIGS. 1 to 16) according to an embodiment of the disclosure may include a support member (e.g., 313 of FIGS. 1 to 16) fixed to the first housing (e.g., 301 of FIGS. 1 to 16).

The electronic device (e.g., 101 of FIGS. 1 to 16) according to an embodiment of the disclosure may include a first frame (e.g., 351 of FIGS. 1 to 16) fixed to the first housing (e.g., 301 of FIGS. 1 to 16).

The electronic device (e.g., 101 of FIGS. 1 to 16) according to an embodiment of the disclosure may include a second frame (e.g., 352 of FIGS. 1 to 16) movably disposed with respect to the first frame (e.g., 351 of FIGS. 1 to 16), and configured to move together with the second housing (e.g., 302 of FIGS. 1 to 16).

According to an embodiment of the disclosure, at least a portion of the second frame (e.g., 352 of FIGS. 1 to 16) may be located between the first frame (e.g., 351 of FIGS. 1 to 16) and the support member (e.g., 313 of FIGS. 1 to 16).

According to an embodiment of the disclosure, the first frame (e.g., 351 of FIGS. 1 to 16) may include a frame side wall (e.g., 3511 of FIGS. 1 to 16) spaced apart from the support member (e.g., 313 of FIGS. 1 to 16) and disposed between the support member (e.g., 313 of FIGS. 1 to 16) and the first housing (e.g., 301 of FIGS. 1 to 16).

According to an embodiment of the disclosure, the second frame (e.g., 352 of FIGS. 1 to 16) may be located between the frame side wall (e.g., 3511 of FIGS. 1 to 16) and the support member (e.g., 313 of FIGS. 1 to 16).

According to an embodiment of the disclosure, the first frame (e.g., 351 of FIGS. 1 to 16) may include a frame side wall (e.g., 3511 of FIGS. 1 to 16) spaced apart from the support member (e.g., 313 of FIGS. 1 to 16).

According to an embodiment of the disclosure, the first frame (e.g., 351 of FIGS. 1 to 16) may include a first frame wall (e.g., 3512 of FIGS. 1 to 16) extending from the frame side wall (e.g., 3511 of FIGS. 1 to 16) toward the support member (e.g., 313 of FIGS. 1 to 16).

According to an embodiment of the disclosure, the first frame (e.g., 351 of FIGS. 1 to 16) may include a second frame wall (e.g., 3513 of FIGS. 1 to 16) extending from the frame side wall (e.g., 3511 of FIGS. 1 to 16) toward the support member (e.g., 313 of FIGS. 1 to 16), and spaced apart from the first frame wall (e.g., 3512 of FIGS. 1 to 16).

According to an embodiment of the disclosure, at least a portion of the second frame (e.g., 352 of FIGS. 1 to 16) may be surrounded by the support member (e.g., 313 of FIGS. 1 to 16), the frame side wall (e.g., 3511 of FIGS. 1 to 16), the first frame wall (e.g., 3512 of FIGS. 1 to 16) and the second frame wall (e.g., 3513 of FIGS. 1 to 16).

According to an embodiment of the disclosure, the first frame (e.g., 351 of FIGS. 1 to 16) may include a first surface (e.g., 3511a of FIGS. 1 to 16) facing the first housing (e.g., 301 of FIGS. 1 to 16).

According to an embodiment of the disclosure, the first frame (e.g., 351 of FIGS. 1 to 16) may include a second surface (e.g., 3511b of FIGS. 1 to 16) spaced apart from the support member (e.g., 313 of FIGS. 1 to 16) and facing the second frame (e.g., 352 of FIGS. 1 to 16).

The electronic device (e.g., 101 of FIGS. 1 to 16) according to an embodiment of the disclosure may include a guide space (e.g., 354 of FIGS. 1 to 16) formed between the first frame (e.g., 351 of FIGS. 1 to 16) and the support member (e.g., 313 of FIGS. 1 to 16), in which the second frame (e.g., 352 of FIGS. 1 to 16) is movably disposed.

According to an embodiment of the disclosure, the first frame (e.g., 351 of FIGS. 1 to 16) may include a frame side wall (e.g., 3511 of FIGS. 1 to 16) spaced apart from the support member (e.g., 313 of FIGS. 1 to 16).

According to an embodiment of the disclosure, the first frame (e.g., 351 of FIGS. 1 to 16) may include a first stepped portion (e.g., 3514 of FIGS. 1 to 16) protruding from the frame side wall (e.g., 3511 of FIGS. 1 to 16) toward the support member (e.g., 313 of FIGS. 1 to 16).

According to an embodiment of the disclosure, the first frame (e.g., 351 of FIGS. 1 to 16) may include a second stepped portion (e.g., 3515 of FIGS. 1 to 16) protruding from the frame side wall (e.g., 3511 of FIGS. 1 to 16) toward the support member (e.g., 313 of FIGS. 1 to 16), and spaced apart from the first stepped portion (e.g., 3514 of FIGS. 1 to 16).

According to an embodiment of the disclosure, at least a portion of the second frame (e.g., 352 of FIGS. 1 to 16) may be located between the first stepped portion (e.g., 3514 of FIGS. 1 to 16) and the second stepped portion (e.g., 3515 of FIGS. 1 to 16).

According to an embodiment of the disclosure, the support member (e.g., 313 of FIGS. 1 to 16) may include a support side wall (e.g., 3133 of FIGS. 1 to 16) facing the first frame (e.g., 351 of FIGS. 1 to 16).

According to an embodiment of the disclosure, the second frame (e.g., 352 of FIGS. 1 to 16) may be located between the first frame (e.g., 351 of FIGS. 1 to 16) and the support side wall (e.g., 3133 of FIGS. 1 to 16).

According to an embodiment of the disclosure, the support member (e.g., 313 of FIGS. 1 to 16) may include a support side wall (e.g., 3133 of FIGS. 1 to 16) spaced apart from the first frame (e.g., 351 of FIGS. 1 to 16).

According to an embodiment of the disclosure, the support member (e.g., 313 of FIGS. 1 to 16) may include a support protrusion (e.g., 3134 of FIGS. 1 to 16) protruding from the support side wall (e.g., 3133 of FIGS. 1 to 16) toward the first frame (e.g., 351 of FIGS. 1 to 16).

According to an embodiment of the disclosure, the support member (e.g., 313 of FIGS. 1 to 16) may include a shielding surface (e.g., 3134a of FIGS. 1 to 16) formed on the support protrusion (e.g., 3134 of FIGS. 1 to 16).

The electronic device (e.g., 101 of FIGS. 1 to 16) according to an embodiment of the disclosure may include a first coupling member (e.g., 356 of FIGS. 1 to 16) passing through the first frame (e.g., 351 of FIGS. 1 to 16) and the support member (e.g., 313 of FIGS. 1 to 16).

According to an embodiment of the disclosure, the first frame (e.g., 351 of FIGS. 1 to 16) may include a first coupling portion (e.g., 3517 of FIGS. 1 to 16) through which the first coupling member (e.g., 356 of FIGS. 1 to 16) passes.

The electronic device (e.g., 101 of FIGS. 1 to 16) according to an embodiment of the disclosure may include a second coupling member (e.g., 357 of FIGS. 1 to 16) passing through the first frame (e.g., 351 of FIGS. 1 to 16) and the support member (e.g., 313 of FIGS. 1 to 16).

According to an embodiment of the disclosure, the first frame (e.g., 351 of FIGS. 1 to 16) may include a second coupling portion (e.g., 3518 of FIGS. 1 to 16) extending to cover at least a portion of the support member (e.g., 313 of FIGS. 1 to 16), through which the second coupling member (e.g., 357 of FIGS. 1 to 16) passes.

According to an embodiment of the disclosure, the second frame (e.g., 352 of FIGS. 1 to 16) may include a second frame body (e.g., 3521 of FIGS. 1 to 16) movably disposed in the first frame (e.g., 351 of FIGS. 1 to 16).

According to an embodiment of the disclosure, the second frame (e.g., 352 of FIGS. 1 to 16) may include a second frame protrusion (e.g., 3522 of FIGS. 1 to 16) protruding from the second frame body (e.g., 3521 of FIGS. 1 to 16) and fixed to the second housing (e.g., 302 of FIGS. 1 to 16).

According to an embodiment of the disclosure, the second frame (e.g., 352 of FIGS. 1 to 16) may include a first portion (e.g., 352a of FIGS. 1 to 16) having a first width.

According to an embodiment of the disclosure, the second frame (e.g., 352 of FIGS. 1 to 16) may include a second portion (e.g., 352b of FIGS. 1 to 16) extending from the first portion (e.g., 352a of FIGS. 1 to 16) and having a second width smaller than the first width.

The electronic device (e.g., 101 of FIGS. 1 to 16) according to an embodiment of the disclosure may include a bearing (e.g., 353 of FIGS. 1 to 16) disposed between the first frame (e.g., 351 of FIGS. 1 to 16) and the second frame (e.g., 352 of FIGS. 1 to 16), and configured to be movable together with the second frame (e.g., 352 of FIGS. 1 to 16).

According to an embodiment of the disclosure, the bearing (e.g., 353 of FIGS. 1 to 16) may include a first bearing (e.g., 3531 of FIGS. 1 to 16).

According to an embodiment of the disclosure, the bearing (e.g., 353 of FIGS. 1 to 16) may include a second bearing (e.g., 3532 of FIGS. 1 to 16) spaced apart from the first bearing (e.g., 3531 of FIGS. 1 to 16).

According to an embodiment of the disclosure, the bearing (e.g., 353 of FIGS. 1 to 16) may include a connector (e.g., 3533 of FIGS. 1 to 16) connecting the first bearing (e.g., 3531 of FIGS. 1 to 16) and the second bearing (e.g., 3532 of FIGS. 1 to 16).

According to an embodiment of the disclosure, the second frame (e.g., 352 of FIGS. 1 to 16) may include a third portion (e.g., 352c of FIGS. 1 to 16) coupled to the bearing (e.g., 353 of FIGS. 1 to 16).

The electronic device (e.g., 101 of FIGS. 1 to 16) according to an embodiment of the disclosure may include a guide (e.g., 350 of FIGS. 1 to 16) at least a portion of which is movably disposed together with the second housing (e.g., 302 of FIGS. 1 to 16).

According to an embodiment of the disclosure, the guide (e.g., 350 of FIGS. 1 to 16) may include a first frame (e.g., 351 of FIGS. 1 to 16) fixed to the first housing (e.g., 301 of FIGS. 1 to 16) and including a frame side wall (e.g., 3511 of FIGS. 1 to 16) disposed between the first housing (e.g., 301 of FIGS. 1 to 16) and the support member (e.g., 313 of FIGS. 1 to 16).

According to an embodiment of the disclosure, the guide (e.g., 350 of FIGS. 1 to 16) may include a second frame (e.g., 352 of FIGS. 1 to 16) movably disposed with respect to the first frame (e.g., 351 of FIGS. 1 to 16), and configured to move together with the second housing (e.g., 302 of FIGS. 1 to 16).

According to an embodiment of the disclosure, the guide (e.g., 350 of FIGS. 1 to 16) may include a guide space (e.g., 354 of FIGS. 1 to 16) formed between the frame side wall (e.g., 3511 of FIGS. 1 to 16) and the support member (e.g., 313 of FIGS. 1 to 16), in which the second frame (e.g., 352 of FIGS. 1 to 16) is movably disposed.

While specific embodiments have been described in the detailed description of the disclosure, it will be apparent to those of ordinary skill in the art that various modifications may be made without departing from the scope of the disclosure.

Although the disclosure has been described and illustrated with reference to an embodiment, it should be understood that the embodiment is not intended to limit the disclosure but is provided for illustration. It will be apparent to those skilled in the art that various changes may be made in form and detail without departing from the overall scope of the disclosure, including the appended claims and equivalents thereof.

## Claims

1. An electronic device (101) comprising:
a first housing (301);
a second housing (302) movably disposed with respect to the first housing (301);
a flexible display (330) movably disposed together with the second housing (302), wherein at least a portion of the flexible display (330) is configured to be foldable or unfoldable;
a support member (313) fixed to the first housing (301);
a first frame (351) fixed to the first housing (301); and
a second frame (352) movably disposed with respect to the first frame (351), and configured to move together with the second housing (302),
wherein at least a portion of the second frame (352) is located between the first frame (351) and the support member (313).

2. The electronic device of claim 1,
wherein the first frame (351) includes a frame side wall (3511) spaced apart from the support member (313) and disposed between the support member (313) and the first housing (301),
wherein the second frame (352) is located between the frame side wall (3511) and the support member (313).

3. The electronic device of claim 1,
wherein the first frame (351) includes:
a frame side wall (3511) spaced apart from the support member (313);
a first frame wall (3512) extending from the frame side wall (3511) toward the support member (313); and
a second frame wall (3513) extending from the frame side wall (3511) toward the support member (313), and spaced apart from the first frame wall (3512),
wherein at least a portion of the second frame (352) is surrounded by the support member (313), the frame side wall (3511), the first frame wall (3512) and the second frame wall (3513).

4. The electronic device of any one of claims 1 to 3,
wherein the first frame (351) includes:
a first surface (3511a) facing the first housing (301); and
a second surface (3511b) spaced apart from the support member (313) and facing the second frame (352).

5. The electronic device of any one of claims 1 to 4, further comprising:
a guide space (354) formed between the first frame (351) and the support member (313), wherein the second frame (352) is movably disposed in the guide space (354).

6. The electronic device of any one of claims 1, 4, and 5,
wherein the first frame (351) includes:
a frame side wall (3511) spaced apart from the support member (313);
a first stepped portion (3514) protruding from the frame side wall (3511) toward the support member (313); and
a second stepped portion (3515) protruding from the frame side wall (3511) toward the support member (313), and spaced apart from the first stepped portion (3514),
wherein at least a portion of the second frame (352) is located between the first stepped portion (3514) and the second stepped portion (3515).

7. The electronic device of any one of claims 1 to 6,
wherein the support member (313) includes a support side wall (3133) facing the first frame (351), and
wherein the second frame (352) is located between the first frame (351) and the support side wall (3133).

8. The electronic device of any one of claims 1 to 6,
wherein the support member (313) includes:
a support side wall (3133) spaced apart from the first frame (351);
a support protrusion (3134) protruding from the support side wall (3133) toward the first frame (351); and
a shielding surface (3134a) formed on the support protrusion (3134).

9. The electronic device of any one of claims 1 to 8, further comprising:
a first coupling member (356) passing through the first frame (351) and the support member (313),
wherein the first frame (351) includes a first coupling portion (3517) through which the first coupling member (356) passes.

10. The electronic device of claim 9, further comprising:
a second coupling member (357) passing through the first frame (351) and the support member (313),
wherein the first frame (351) includes a second coupling portion (3518) extending to cover at least a portion of the support member (313), and
wherein the second coupling member (357) passes through the second coupling portion (3518).

11. The electronic device of any one of claims 1 to 10,
wherein the second frame (352) includes:
a second frame body (3521) movably disposed in the first frame (351); and
a second frame protrusion (3522) protruding from the second frame body (3521) and fixed to the second housing (302).

12. The electronic device of any one of claims 1 to 11,
wherein the second frame (352) includes:
a first portion (3521a) having a first width; and
a second portion (3521b) extending from the first portion (3521a) and having a second width smaller than the first width.

13. The electronic device of any one of claims 1 to 11, further comprising:
a bearing (353) disposed between the first frame (351) and the second frame (352), and configured to be movable with the second frame (352).

14. The electronic device of claim 13,
wherein the bearing (353) includes:
a first bearing (3531);
a second bearing (3532) spaced apart from the first bearing (3531); and
a connector (3533) connecting the first bearing (3531) and the second bearing (3532).

15. The electronic device of claim 13 or 14,
wherein the second frame (352) includes:
a first portion (3521a) having a first width;
a second portion (3521b) extending from the first portion (3521a) and having a second width smaller than the first width; and a third portion (352c) coupled to the bearing (353).
